# EUROPEAN PATENT SPECIFICATION

(11) **EP 2 865 901 B1**
(45) Date of publication and mention of the grant of the patent: **04.05.2016**
(21) Application number: 13190385.8
(22) Date of filing: 25.10.2013
(51) Int. Cl.: F16B 7/02, F16B 19/02, F16B 39/22, F16B 43/00

(54) **Device for eliminating a clearance in a hole, and corresponding door hinge and assembling method**
Vorrichtung zur Beseitigung des Spiels in einem Loch und entsprechendes Türscharnier und Montageverfahren
Dispositif pour éliminer un jeu dans un perçage, charnière de porte correspondante et procédé d'assemblage

(43) Date of publication of application: 29.04.2015
(73) Proprietor: U-Shin Deutschland Zugangssysteme GmbH, DE-85253 Erdweg (DE)
(72) Inventor: Bittner, Eric, 85253 Erdweg (DE); Deutschmann, Nicolai, 85253 Erdweg (DE)
(74) Representative: Huisman, Aurélien

(56) References cited:
- EP-A1- 0 173 426
- EP-A1- 2 068 127
- EP-A2- 2 634 438

## Description

The invention relates to a device for eliminating a clearance in a hole of an
element. Document EP2634438 discloses a prior art device for eliminating a clearance in a hole.
The device also enables to fasten a fixed part of the vehicle and a mobile part
of the vehicle, more precisely to a mobile part of a vehicle door.

The element comprising a hole wherein a clearance has to eliminated may be a hinge belonging to a pivotable door of an automotive vehicle. The vehicle door may be either a side door, a tailgate, the lid for closing the engine compartment or the flap for closing a roof opening in a vehicle.

The hinge is thereafter named door hinge.

This invention also relates to such a door hinge comprising a hole in which the device for eliminating a clearance is mounted.

The invention also relates to the method for assembling the device for eliminating a clearance in a hole of an element, such as the door hinge.

As an example, on vehicles equipped with an automatic tailgate two modular drive units for actuating the tailgate are generally connected to two door hinge.

A modular drive unit comprises in a known manner a motor, a gear assembly and transmission means connected to the door hinge. For example, a lever may be on one end screwed to a moving part of the hinge. Moreover, the modular drive unit may also be tightened with the door hinge trough a device mounted in a hole of the hinge. To that end, such a device traditionally has tightening means such as a bolt with a nut. The device according to the invention also enables to fasten the modular drive unit to the door hinge. The modular drive unit is a fixed part of the vehicle and the door hinge is a mobile part of a vehicle door.

Currently, the hole of the door hinge is a longitudinal hole, or even a slot, and for eliminating the clearance between the bolt and the hole, a bolt with an oblong cross-section is used. The bolt is turned in the hole until it locks, meaning the clearance is eliminated. And then the nut may be tightened.

A significant problem is that this concept requires more effort for assembly, by adjusting first and locking afterwards.

There is thus a need for replacing it.

It is known to use an assembly of a conical bolt and a spacer with split sleeve in a single piece. Indeed when tightening, the conical pin of the bolt causes the sleeve to bend outwards. This eliminates the clearance in the hole of the hinge.

However it was realized that the contact of the sleeve in the hole is only punctual due to the conical form of the bolt in the hole.

So the idea to use this conical bolt and a spacer with split sleeve for eliminating the clearance by tightening the bolt works at the beginning. But, due to the punctual contact of the sleeve in the hole the connection may not stay solid after a load is applied. After a while a clearance may develop again.

Moreover, there are more parts and the assembling steps may be long.

The object of the present invention is thus to overcome these drawbacks of the prior art.

To this end, one subject of the invention is to provide a device for eliminating a clearance in the hole of an element in a sustainable manner.

This object is achieved according to the invention by a device for eliminating a clearance in a hole of an element, comprising tightening means with a first and a second complementary parts, wherein:
- the first part of the tightening means is able to be mounted in the hole for eliminating the clearance when tightening, and
- the second part of the tightening means is able to secure the first part to a bracket by rotating,
characterized in that:
- the first part of the tightening means has a substantially conical outer shape able to be inserted in a corresponding aperture of the bracket, and in that
- the first and second parts of the tightening means are provided with a predetermined friction force between first and second parts, so that by rotating, the second part rotates the first part of the tightening means until the first part locks in the bracket aperture and eliminates the clearance in the hole.

The first part may thus be positioned and tightened only by rotating the second part. That reduces the amount of work for assembly on a car body for example.

Moreover, the effort in assembly is less than the bolt concept of the state of the art, as only tightening is required without needing an adjustment of the eccentric bolt in addition.

The friction force enables the second part to turn the first part before tightening it thanks to the conical shape.

Therefore, the design of the conical shape, the fastening torque of the second part and the friction force are defined in order to allow this rotation of the first part before tightening for securing on the bracket.

Through such device, the assembly of a door hinge to a drive unit for actuating the door to be pivoted is thus improved.

The device according to the invention may also comprise one or more of the following characteristics, taken separately or in combination:
- the first part and second part are threaded tightening means;
- at least one part of the tightening means is provided with retention means, such as mechanical or chemical retention means;
- the bracket aperture for receiving the first part of the tightening means is delimited by a substantially conical wall;
- the tightening means include a bolt and a screw or a nut, and wherein the bolt is at least partially provided with a substantially conical outer shape;
- the bolt includes a threaded hole for receiving a screw;
- the bolt includes a threaded pin cooperating with a nut;
- the bolt includes a body able to be inserted in the hole for eliminating the clearance and a head with a substantially conical outer shape able to be mounted on the bracket;
- the body of the bolt has a sensibly oblong cross-section; and
- the device comprises a washer between the bracket and the second part of the tightening means.

The invention also relates to a door hinge for a vehicle including a hole for fixing said door hinge to a modular drive unit of a vehicle door and a device as defined before, for eliminating a clearance in the hole of the door hinge.

According to an embodiment, the hole is a longitudinal hole, or even a slot.

The invention further relates to a method for assembling a device as described before, for eliminating a clearance in a hole of an element, comprising the steps of:
- rotating said second part of the tightening means for further positioning the first part in the hole until the first part locks in the bracket aperture and eliminates the clearance in the hole, and
- securing said first part on the bracket by continuing to rotate the second part.

According to an embodiment, the first part eliminates the clearance in the hole due to an oblong section.

The method may further comprise preliminary steps of:
- inserting the first part of the tightening means into the aperture of the bracket,
- inserting the second complementary part onto the first part of the tightening means.

Other characteristics and advantages of the invention will emerge more clearly on reading the following description, which is given as a non-limiting illustrative example, and the attached drawings, among which:
- figure 1 schematically shows a device for eliminating a clearance in a hole of a customer interface,
- figure 2 shows a schematically illustrated modular drive unit for pivoting a vehicle door, the hinge of the vehicle door to be pivoted and a device for eliminating a clearance in a hole of the door hinge,
- figure 3 shows a perspective view of a roof and a pillar of a corresponding vehicle comprising the door hinge, the device for eliminating the clearance and the modular drive unit of figure 2,
- figure 4 shows a schematic perspective view of the door hinge, the device for eliminating the clearance and the modular drive unit of figure 2,
- figure 5 shows a perspective view of the device for eliminating the clearance and the modular drive unit of figure 4,
- figure 6a shows a schematic sectional view of the device for eliminating a clearance according to a first embodiment,
- figure 6b is a rear view of the device of figure 6a, and
- figure 7 shows a schematic sectional view of the device for eliminating a clearance according to a second embodiment.

In these figures, identical elements carry the same references.

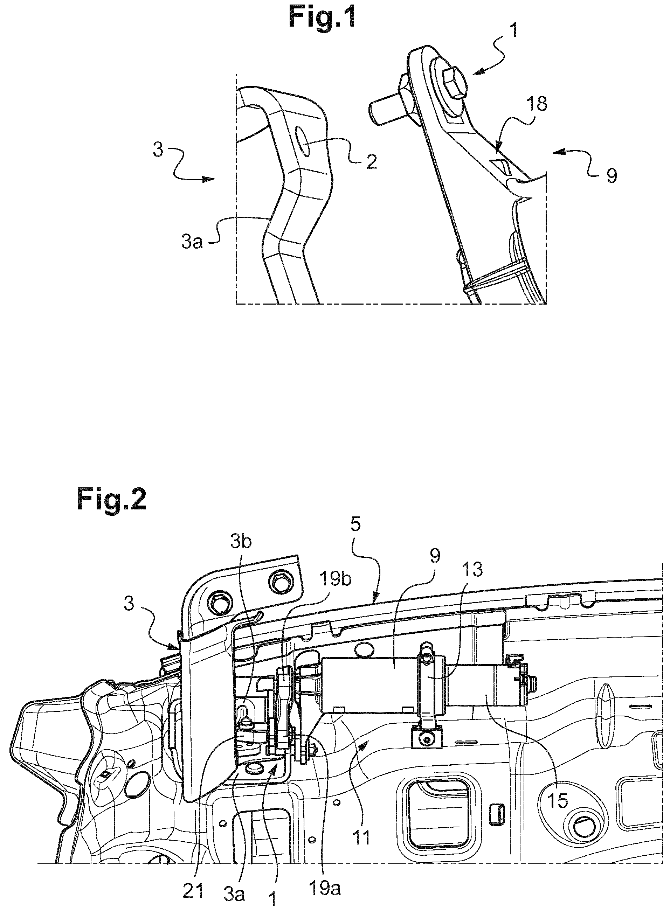

In figure 1, reference 1 indicates a device 1 for eliminating a clearance in a hole 2 of an element 3 in which the device 1 is mounted.

Relating to figure 2, the invention is particularly aimed at eliminating a clearance in a hinge 3 of a vehicle door. The device 1 also enables to fasten a fixed part of the vehicle to a mobile part of the vehicle door such as the hinge 3 of the vehicle door. Said hinge 3 is thereafter named door hinge 3.

In this document, the term "vehicle door" is understood quite generally to mean a pivotable part for closing a vehicle opening. The vehicle door may therefore involve either a side door, a tailgate, the lid for closing the engine compartment or the flap for closing a roof opening in a vehicle.

As an example, the following description refers to a tailgate which can be pivoted via a door hinge 3.

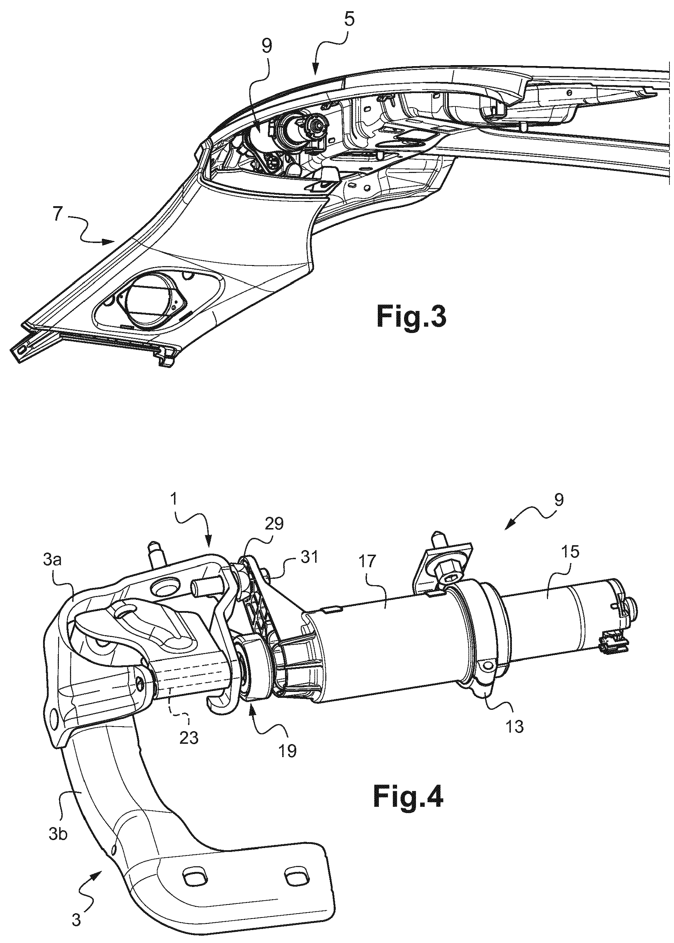

Figure 3 shows partially the roof 5 and a pillar 7 of a corresponding vehicle comprising such a door hinge 3 for pivoting the tailgate (not illustrated).

The vehicle door, by instance the tailgate, can be actuated by a modular drive unit 9 connected to the door hinge 3. The device 1 is also used for fastening the modular drive unit 9 being a fixed part of the vehicle, to the door hinge 3 being a mobile part of the vehicle door. The device 1 is able to eliminate a clearance in the door hinge 3, in order to avoid warping of the modular drive unit 9 during the assembling. Indeed, manufacturing tolerances may have to be compensated.

For example, in a vehicle equipped with automatic tailgate two modular drive units 9 are connected to the two door hinges 3. Alternatively, one modular drive unit is connected to one door hinge 3.

In the illustrated example of figures 2 and 3, the modular drive unit 9 is arranged on and fastened to a roof support 11.

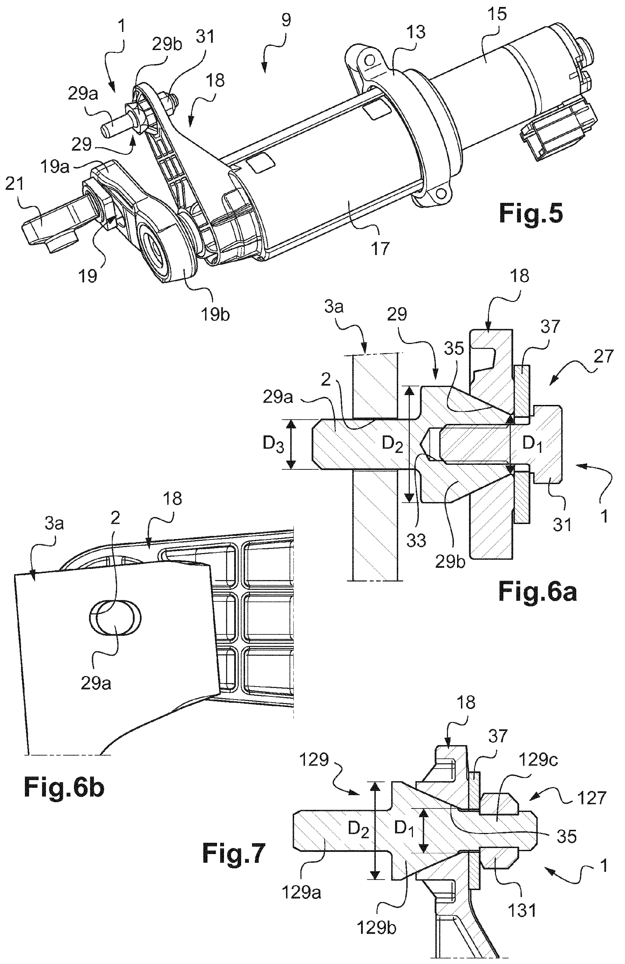

Such a modular drive unit 9 is more visible on figures 4 and 5.

A collar 13 may be provided for fastening said modular drive unit 9 to the roof support 11.

This modular drive unit 9 comprises an electric motor 15. The modular drive unit 9 also comprises:
- a tubular housing 17 receiving a gear assembly connected to the electric motor 15, and
- an interface 18 also called bracket at the free end of the tubular housing 17 and on which the device 1 for eliminating a clearance is intended to be fixed.

A transmission means may be connected on the one hand to the gear assembly in the tubular housing 17 through the interface 18 and on the other hand to the door hinge 3. The transmission means may comprise a lever 19 arranged between the modular drive unit 9 and the door hinge 3 (figure 4).

More precisely, the door hinge 3 may comprise a fixed hinge body 3a and a moving hinge body 3b. The fixed hinge body 3a is fixed to the roof support 11 and the second moving hinge body 3b is mounted in a pivotable manner.

The lever 19 may be fastened to one end 19a to the moving hinge body 3b via fixation means 21 (cf figures 2 and 5). For example, this end 19a may be screwed to the second moving hinge body 3b. The lever 19 is also fastened to its other end 19b to the modular drive unit 9, more precisely to the drive shaft of the modular drive unit.

As can be seen on figure 4, the hinge body 3a includes a hinge axis 23 which is sensibly aligned to the drive shaft of the modular drive unit 9. The hinge axis 23 attached to the transmission means 19 of the modular drive unit 9, for example to end 19b of the lever 19 opposed to end 19a connected to the second moving hinge body 3b. The hinge axis 23 has an end which protrudes from the fixed hinge body 3a extending towards the drive shaft of the modular drive unit 9 referring to figure 4. Then, the moving hinge body 3b is mounted in a manner such that it can pivot about the hinge axis 23 of the fixed hinge body 3a (cf figure 4).

The fixed hinge body 3a is further maintained with the modular drive unit 9 via the device for eliminating a clearance 1 which is mounted in the hole 2 of the fixed hinge body 3a. This hole 2 is here a longitudinal hole, or even a slot.

Of course, the device for eliminating a clearance 1 may be mounted in a hole of any other interface instead of the fixed hinge body 3a of the door hinge, for assembly with another associated interface such as the bracket 18 of the drive modular unit 9 or any other one.

A first embodiment of the device 1 for eliminating the clearance is shown on figure 6a.

Such a device 1 comprises tightening means 27 with a first 29 and a second 31 complementary parts, at least one part of the tightening means 27, being able to be mounted in the hole 2 for example of the door hinge 3 for eliminating the clearance when tightening.

According to the first embodiment the tightening means 27 include a bolt 29 and a screw 31, the first part being a bolt 29 and the second part being a screw 31.

The bolt 29 is intended to be inserted in the hole 2 of the hinge door 3.

In the first embodiment, the bolt 29 includes a threaded hole 33 for receiving the screw 31.

The friction force of the screw 31 inside the threaded hole 33 of the bolt 29 has to allow to turn first the bolt 29 by rotating the screw 31 before fastening. The friction force may be high enough for allowing such rotation of the bolt 29 before fastening.

At least one part of the tightening means 27 may be provided with retention means, such as mechanical or chemical retention means. For example, the screw 31 may be provided with mechanical or chemical retention means, such as mechanical locking element or an adhesive coat. The selection of appropriate retention means collaborates to obtain the needed friction of the screw 31 inside the threaded hole 33 of the bolt 29. Of course, the fastening torque of the screw 31 is selected to allow the rotation of the bolt 29 by rotating the screw 31 before fastening.

More precisely, the bolt 29 includes two bolt portions: a body 29a and a head 29b ending the body 29a.

The body 29a of the bolt 29 is intended to be inserted in the hole 2 of the door hinge 3 while the head 29b of the bolt 29 is intended to be tightened on the bracket 18 via the screw 31.

The head 29b of the bolt 29 is for example realized as a hexagonal part.

The head 29b of the bolt 29 is provided with the threaded hole 33 for receiving the screw 31.

The design of the conical shape of the head 29b of the bolt 29 may also participate to obtain the required friction of the screw 31 inside the threaded hole 33 of the conical head 29b of the bolt 29.

The bolt 29 is at least partially provided with a substantially conical outer shape. That means at least one portion of the bolt 29 has a substantially conical outer shape.

According to the first embodiment, it is the head 29b of the bolt 29 which has a substantially conical outer shape. Accordingly, the bracket 18 has a corresponding aperture 35 for receiving the bolt 29, the aperture 35 being delimited by a wall substantially conical.

According to an embodiment shown in figure 6b, the body 29a may be for its part shaped with a sensibly oblong cross-section, in order to eliminate the clearance in the hole 2. The body 29a may be sensibly cylindrical with its end intended to be inserted in the hole 2 designed with a sensibly oblong cross-section.

The substantially conical head 29b has a progressively increasing diameter with the smallest diameter D₁ at the end of the bolt 29 opposed to the protruded end of the body 29a and facing the head of the screw 31. The largest diameter D₂ of the head 29b of the bolt 29 is at the end of the head 29b opposed to the smallest diameter D₁.

The body 29a of the bolt 29 may have a diameter D₃ smaller than or substantially equal to the smallest diameter D₁ of the head 29b of the bolt 29.

The device 1 may further comprise a washer 37 interposed between the bracket 18 and the screw 31.

The washer 37 and the screw 31 are on the end of the head 29b of the bolt 29 to tighten the bolt 29.

Thus, the bolt 29 may be pre-assembled to the bracket 18 of the modular drive unit 9 in a rotatable way with a predefined torque, advantageously with a predefined low torque. More precisely, it is the head 29b of the bolt 29 which is inserted in the associated aperture 35 in the bracket 18. In order to connect the modular drive unit 9 to the door hinge 3, one connection is adjustable, here the connection between the device 1 for eliminating the clearance and the fixed hinge body 3a.

The washer 37 may be put over the bracket aperture 35.

Then the screw 31 is placed onto the bolt 29, more precisely introduced in the threaded hole 33 of the bolt 29. The screw 31 passes through the washer 37 and the threaded hole 33 of the bolt 29.

The device 27 may thus be pre-assembled to the modular drive unit 9 but still rotatable with a predefined torque, advantageously with a predefined low torque.

When assembling the device 27 to the door hinge 3, the body 29a of the bolt 29 is inserted in the hole 2, the screw 31 is then rotated until the body 29a of the bolt 29 eliminates the clearance in the hole 2 of the door hinge 3 and the head 29b of the bolt 29 with increasing diameter all along the outer shape locks in the associated aperture 35 in the bracket 18.

The screw 31 is then fastened with the bolt 29 applying a predefined torque, advantageously with a predefined low torque. For that, the screw 31 still rotates while the bolt 29 is locked in position.

Thus, adjusting and fixation are done by the screw 31 and with the help of the conical shape of the bolt 29 and mechanical or chemical retention means. That is to say, there is one step needed for both adjusting and fixation.

In other words, there is no need to adjust the bolt 29 first before tightening reducing thus the amount of work regarding the previous solution of a bolt without conical shape. The bolt 29 is positioned and secured by tightening the screw 31 only.

Moreover regarding the other known solution with a conical bolt and a split sleeve there are less parts, the assembling steps are reduced, it is thus cheaper and easier to assemble.

A second embodiment of a device 1 for eliminating a clearance is represented on figure 7.

This second embodiment differs from the first one by the tightening means 127 including here a bolt 129 with a nut 131.

To sum up the screw 31 is replaced by a nut 131, and the bolt 29 with a threaded hole 33 for receiving the screw 31 is replaced by a bolt 129 including three bolt portions: a body 129a, a head 129b and a pin 129c protruding from the head 129b.

The head 129b of the bolt 129 is for example realized as a hexagonal part.

The body 129a of the bolt 129 is intended to be inserted in the hole 2 of the door hinge 3, the head 29b of the bolt 29 is intended to be tightened on the bracket 18 via the pin 129c which is a threaded pin cooperating with the nut 131.

The friction force between the threaded pin 129c of the bolt 129 inside the nut 131 has to allow to turn first the bolt 129 by rotating the nut 131 before fastening. As previously, the friction force may be high enough for allowing such rotation of the bolt 29 before fastening.

The nut 131 and/or the threaded pin 129c of the bolt 129 may be provided with mechanical or chemical retention means, such as mechanical locking element or an adhesive coat. The selection of appropriate retention means collaborates to obtain the needed friction between the threaded pin 129c of the bolt 29 and the nut 131. Of course, the fastening torque of the nut 131 is selected in view to allow the rotation of the bolt 129 by rotating the nut 131 before fastening.

The bolt 129 is at least partially provided with a substantially conical outer shape. That means at least one portion of the bolt 129 has a substantially conical outer shape.

In the illustrated example, it is the head 129b of the bolt 129 which has a substantially conical outer shape.

According to an embodiment, the body 129a may have a sensibly oblong cross-section, in order to eliminate the clearance in the hole 2. The body 129a may be sensibly cylindrical with its end intended to be inserted in the hole 2 designed with a sensibly oblong cross-section

Thus as illustrated on figure 7, the conical head 129b has a progressively increasing diameter with the smallest diameter D₁ at the end of the head 129a joined to the protruded pin 129c. The largest diameter D₂ of the head 129b of the bolt 129 is at the end of the head 129b opposed to the smallest diameter D₁ joined to the body 129a.

The body 129a and the threaded pin 129c of the bolt 129, here substantially cylindrical, have smaller diameters than or substantially equal to the smallest diameter D₁ of the head 129b of the bolt 129.

The device 1 may further comprise a washer 37 interposed between the bracket 18 and the nut 131.

At the assembled state of the device 1, the pin 129c is inserted in the washer 37 and the nut 131. Moreover, the end of the pin 129c protrudes from said nut 131.

The friction between the nut 131 and the threaded pin 129c inside the nut 131 must be defined to allow to turn first the bolt 129 by rotating the nut 131 before fastening.

Thus, similarly to the first embodiment, the bolt 129 may be pre-assembled to the bracket 18 of the modular drive unit 9 in a rotatable way with a predefined torque. More precisely, the head 129b and threaded pin 129c of the bolt 129 are inserted in the associated aperture 35 in the bracket 18. In order to connect the modular drive unit 9 to the door hinge 3, one connection is adjustable, here the connection between the device 1 for eliminating the clearance and the fixed hinge body 3a.

The washer 37 may be put over the bracket aperture 35.

Then the nut 131 is placed onto the bolt 129. The threaded pin 129c of the bolt 129 passes through the washer 37 and the nut 131.

Thus the device 127 may be pre-assembled to the modular drive unit 9 but still rotatable with a predefined torque.

When assembling the device 127 to the door hinge 3, the body 129a of the bolt 29 is inserted in the hole 2, the nut 131 is then rotated until the body 129a of the bolt 129 eliminates the clearance in the hole 2 of the door hinge 3 and then locks the conical head 129b of the bolt 129 in the associated aperture 35 in the bracket 18.

The nut 131 is then fastened with the bolt 129 applying a predefined torque. Indeed the nut 131 still rotates while the bolt 129 is locked in position thus securing the bolt 129 on the bracket 18.

Similarly to the first embodiment, there is no need to adjust the bolt 29 first before tightening reducing thus the amount of work regarding the previous known solution of bolt. The bolt 129 is positioned and is secured by tightening the nut 131 only. Adjusting and fixation are done by the nut 131 and with the help of the conical shape of the bolt 129 and mechanical or chemical retention means. That is to say, there is one step needed for both adjusting and fixation.

Moreover regarding the other known solution with a conical bolt and a split sleeve there are less parts, the assembling steps are reduced, it is thus cheaper and easier to assemble.

Thus, in the different embodiments previously described, the tightening means 27, 127 enable that during rotating one part 31, 131 the other part 29, 129 is rotated before fastening.

The rotation of both parts 31, 29 or 131, 129, therefore enables filling the clearance in the hole 2 of the door hinge 3 in the described examples and a conical shape 29b, 129b of at least one part 29, 129 of the tightening means 27, 127 locks in the bracket 18.

The tightening means are then fastening.

Thus only the rotation of one part 31, 131 of the tightening means 27, 127, such as a screw 31 or a nut 131 is needed for positioning and securing the tightening means 27, 127.

Moreover, the effort in assembly is less than with a known concept of state in the art since with the invention only a screw 31 or nut 131 has to be rotated whereas in the state of the art concept of bolt an additional adjustment of the bolt is required.

Indeed, in prior art solutions two steps are generally required, one for adjusting and one for fixation. The bolt is rotated in the longitudinal hole until it is trapped by a hexagonal part of the bolt, then the bolt is locked by the nut

On the contrary, according to the invention adjusting and fixation are done by the screw 31 respectively the nut 131 and with the help of the conical shape of the bolt and mechanical or chemical retention means. So there is only one step necessary for adjusting and fixation. Therefore, a hexagonal part of the bolt may be only needed for a demounting process.

## Claims

1. Device (1) for eliminating a clearance in a hole (2) of an element, comprising tightening means (27; 127) with a first (29; 129) and a second (31; 131) complementary parts, wherein:
- the first part (29, 129) of the tightening means (27; 127) is able to be mounted in the hole (2) for eliminating the clearance when tightening, and
- the second part (31, 131) of the tightening means (27, 127) is able to secure the first part (29, 129) to a bracket (18) by rotating,
**characterized in that**:
- the first part (29, 129) of the tightening means (27; 127) has a substantially conical outer shape able to be inserted in a corresponding aperture (35) of the bracket (18), and **in that**
- the first (29, 129) and second (31, 131) parts of the tightening means (27, 127) are provided with a predetermined friction force between first and second parts (29, 129, 31, 131), so that by rotating the second part (31, 131) rotates the first part (29, 129) of the tightening means (27, 127) until the first part (29, 129) locks in the bracket (18) aperture (35) and eliminates the clearance in the hole (2).

2. Device according to claim 1, wherein the first part (29, 129) and second part (31, 131) are threaded tightening means (27, 127).

3. Device according to claim 1 or 2, wherein at least one part (29, 129, 31, 131) of the tightening means (27, 127) is provided with retention means, such as mechanical or chemical retention means.

4. Device according to any one of the preceding claims, wherein the bracket (18) aperture (35) for receiving the first part (29, 129) of the tightening means (27, 127) is delimited by a substantially conical wall.

5. Device according to any one of preceding claims, wherein the tightening means (27; 127) include a bolt (29; 129) and a screw (31) or a nut (131), and wherein the bolt (29) is at least partially provided with a substantially conical outer shape.

6. Device according to claim 5, wherein the bolt (29) includes a threaded hole (33) for receiving a screw (31).

7. Device according to claim 5, wherein the bolt (129) includes a threaded pin (129c) cooperating with the nut (131).

8. Device according to any one of claims 5 to 7, wherein the bolt (29, 129) includes a body (29a, 129a) able to be inserted in the hole (2) for eliminating the clearance and a head (29b, 129b) with a substantially conical outer shape able to be mounted on the bracket (18).

9. Device according to claim 8, wherein the body (29a, 192a) of the bolt (29, 129) has a sensibly oblong cross-section.

10. Device according to any one of preceding claims, comprising a washer (37) between the bracket (18) and the second part (31, 131) of the tightening means (27, 127).

11. Door hinge (3) for a vehicle including a hole (2) for fixing said door hinge (3) to a modular drive unit (9) of a vehicle door and a device (1) for eliminating the clearance in the hole (2) of said door hinge (3) as set forth in any one of claims 1 to 10.

12. Door hinge (3) according to claim 11, which hole (2) is a longitudinal hole (2).

13. Method for assembling a device (1) according to any one of claims 1 to 10 for eliminating a clearance in a hole (2) of an element, comprising the steps of:
- rotating said second part (31, 131) of the tightening means (27, 127) for further positioning the first part (29, 129) in the hole (2) until the first part (29, 129) locks in the bracket aperture (35) and eliminates the clearance in the hole (2), and
- securing said first part (29, 129) on the bracket (18) by continuing to rotate the second part (31, 131).

14. Method according to claim 13, comprising preliminary steps of:
- inserting the first part (29, 129) of the tightening means (27, 127) into the aperture (35) of the bracket (18),
- inserting the second complementary part (31, 131) onto the first part (29, 129) of the tightening means (27, 127).

## Patentansprüche

1. Vorrichtung (1) für ein Spiel in einem loch (2) eines elements eliminiert, umfassend Spannmittel (27; 127) mit einem ersten (29; 129) und einem zweiten (31; 131) komplementäre Teile, wobei:
- der erste Teil (29, 129) der Spannmittel (27; 127) in der Lage ist in dem Loch angebracht zu werden (2) für den Zwischenraum zu beseitigen beim Anziehen und
- der zweite Teil (31, 131) der Spannmittel (27, 127) in der Lage ist, den ersten Teil (29, 129) an einer Halterung zu befestigen (18) durch Drehen,
**dadurch gekennzeichnet, dass**:
- der erste Teil (29, 129) der Spannmittel (27; 127) eine im wesentlichen konische äußere Form der Lage in eine entsprechende Öffnung (35) des Bügels (18) eingeführt zu werden, und daß
- der erste (29, 129) und zweiten (31, 131) Teile der Befestigungsmittel (27, 127) mit einer vorbestimmten Reibungskraft zwischen dem ersten und dem zweiten Teil (29, 129, 31, 131), so dass durch Drehen des zweiten Teils (31, 131), dreht sich der erste Teil (29, 129) der Spannmittel (27, 127), bis der erste Teil (29, 219), Sperren in der Halterung (18) Öffnung (35) und beseitigt die Spiel in der Bohrung (2).

2. Vorrichtung nach Anspruch 1, wobei der erste Teil (29, 129) und einen zweiten Teil (31, 131) Spannmittel mit Gewinde (27, 127).

3. Vorrichtung nach Anspruch 1 oder 2, wobei zumindest ein Teil (29, 129, 31, 131) der Spannmittel (27, 127) mit Rückhaltemitteln versehen ist, wie beispielsweise mechanische oder chemische Rückhaltemittel.

4. Vorrichtung nach einem der vorhergehenden Ansprüche, wobei die Halterung (18) Öffnung (35) für den ersten Aufnahmeteil (29, 129) der Spanneinrichtung (27, 127) durch eine im Wesentlichen konische Wand begrenzt ist.

5. Vorrichtung nach einem der vorhergehenden Ansprüche, wobei die Spannmittel (27; 127) einen Bolzen (29; 129) und eine Schraube (31) oder eine Mutter (131), und wobei der Bolzen (29) ein dest teilweise mit einem im wesentlichen konischen Außen vorgesehen
gestalten.

6. Vorrichtung nach Anspruch 5, wobei der Bolzen (29) eine Gewindebohrung (33) zur Aufnahme einer Schraube (31).

7. Vorrichtung nach Anspruch 5, wobei der Bolzen (129) einen Gewindestift (129c), die mit der Mutter (131).

8. Vorrichtung nach einem der Ansprüche 5 bis 7, wobei der Bolzen (29, 129) einen Körper (29a, 129a) in der Lage in das Loch eingeführt werden kann (2) für den Zwischenraum zu beseitigen und einen Kopf (29b, 129b) mit einer im wesentlichen konischen Außenform der Lage auf der Halterung (18) montiert werden.

9. Vorrichtung nach Anspruch 8, wobei der Körper (29a, 129a) des Riegels (29, 129) einen merklich rechteckigen Querschnitt auf.

10. Vorrichtung nach einem der vorhergehenden Ansprüche, umfassend eine Unterlegscheibe (37) zwischen der Halterung (18) und dem zweiten Teil (31, 131) der Spannmittel (27, 127).

11. Türscharnier (3) für ein Fahrzeug ein Loch einschließlich (2) zur Befestigung des Türscharniers (3) mit einem modularen Antriebseinheit (9) einer Fahrzeugtür und einer Vorrichtung (1) für den Zwischenraum in das Loch zu beseitigen (2) des Türscharniers (3), wie er in einem der Ansprüche 1 bis 10.

12. Türscharnier (3) nach Anspruch 11, das Loch (2) ein Langloch (2) ist.

13. Verfahren zur Herstellung einer Vorrichtung Zusammenbauen (1) nach einem der Ansprüche 1 bis 10 für ein Spiel in einem Loch Eliminieren (2) eines Elements, umfassend die Schritte:
- drehen des zweiten Teils (31, 131) der Spannmittel (27, 127) für eine weitere Positionierung der erste Teil (29, 129) in dem Loch (2) bis zum ersten Teil (29, 129), Sperren in der Trägeröffnung (35) und eliminiert das Spiel in dem Loch (2), und
- befestigen des ersten Teils (29, 129) an der Halterung (18) durch Fortsetzen des zweiten Teils (31, 131) zu drehen.

14. Verfahren nach Anspruch 13, umfassend vorläufige Schritte:
- einsetzen des ersten Teils (29, 129) der Spannmittel (27, 127) in der Öffnung (35) des Brackets (18),
- der zweite komplementäre Teil Einsetzen (31, 131) auf dem ersten Teil (29, 129) der Spannmittel (27, 127).

## Revendications

1. Dispositif (1) pour éliminer un jeu dans un trou (2) d'un élément, comprenant un moyen de serrage (27; 127) avec une première (29; 129) et une seconde (31; 131) des parties complémentaires, dans lequel:
- la première partie (29, 129) des moyens de serrage (27; 127) est apte à être montée dans le trou (2) pour éliminer le jeu lors du serrage, et
- la deuxième partie (31, 131) des moyens de serrage (27, 127) est en mesure d'assurer la première partie (29, 129) sur un support (18) en faisant tourner,
**caractérisé en ce que**:
- la première partie (29, 129) des moyens de serrage (27; 127) présente une forme extérieure sensiblement conique pouvant être insérée dans une ouverture correspondante (35) du support (18), et **en ce que**
- le premier (29, 129) et deuxième (31, 131) parties des moyens de serrage (27, 127) sont munies d'une force de friction prédéterminée entre les première et seconde parties (29, 129, 31, 131), de sorte qu'en faisant tourner la seconde partie (31, 131) la première partie (29, 129) des moyens de serrage (27, 127) tourne jusqu'à ce que la première partie (29, 219) verrouille le support (18), l'ouverture (35) et élimine le jeu dans le trou (2).

2. Dispositif selon la revendication 1, dans lequel la première partie (29, 129) et une seconde partie (31, 131) sont enfilées par des moyens de serrage (27, 127).

3. Dispositif selon la revendication 1 ou 2, dans lequel au moins une partie (29, 129, 31, 131) des moyens de serrage (27, 127) est pourvu de moyens de retenue, tels que des moyens de retenue mécanique ou chimique.

4. Dispositif selon l'une quelconque des revendications précédentes, dans lequel l'ouverture de serrage (18) (35) pour recevoir la première partie (29, 129) des moyens de serrage (27, 127) est délimitée par une paroi sensiblement conique.

5. Dispositif selon l'une quelconque des revendications précédentes, dans lequel les moyens de serrage (27; 127) comprennent un boulon (29; 129) et une vis (31) ou un écrou (131) et dans lequel le verrou (29) est un moins partiellement pourvue d'un extérieur sensiblement de forme conique.

6. Dispositif selon la revendication 5, dans lequel le verrou (29) comporte un trou taraudé (33) destiné à recevoir une vis (31).

7. Dispositif selon la revendication 5, dans lequel le verrou (129) comprend une tige filetée (129c) coopérant avec l'ecrou (131).

8. Dispositif selon l'une quelconque des revendications 5 à 7, dans lequel le boulon (29, 129) comprend un corps (29a, 129a) apte à être insérée dans le trou (2) pour éliminer le jeu et une tête (29b, 129b) ayant une forme extérieure sensiblement conique, apte à être montée sur le support (18).

9. Dispositif selon la revendication 8, dans lequel le corps (29a, 129a) du boulon (29, 129) présente une section transversale sensiblement rectangulaire.

10. Dispositif selon l'une quelconque des revendications précédentes, comprenant une rondelle (37) entre le support (18) et la seconde partie (31, 131) des moyens de serrage (27, 127).

11. Charnière de porte (3) pour un véhicule comprenant un trou (2) pour fixer ladite charnière de porte (3) à une unité d'entraînement modulaire (9) d'une porte de véhicule et un dispositif (1) destiné à supprimer le jeu dans le trou (2) de ladite charnière de porte (3) selon l'une quelconque des revendications 1 à 10.

12. Charnière de porte (3) selon la revendication 11, dans lequel le trou (2) est un trou longitudinal (2).

13. Procédé d'assemblage d'un dispositif (1) selon l'une quelconque des revendications 1 à 10, pour éliminer un jeu dans un trou (2) d'un élément, comprenant les étapes consistant à:
- faire tourner ladite seconde partie (31, 131) des moyens de serrage (27, 127) pour plus de positionnement de la première partie (29, 129) dans le trou (2) jusqu'à ce que la première partie (29, 129) verrouille l'ouverture du support (35) et élimine le jeu dans le trou (2), et
- fixer ladite première partie (29, 129) sur le support (18) en continuant à faire tourner la deuxième partie (31, 131).

14. Procédé selon la revendication 13, comprenant les étapes préliminaires consistant à:
- insérer la première partie (29, 129) des moyens de serrage (27, 127) dans l'ouverture (35) du support (18),
- insérer la seconde partie complémentaire (31, 131) sur la première partie (29, 129) des moyens de serrage (27, 127).
